# EUROPÄISCHE PATENTANMELDUNG

(11) **EP 1 967 402 A1**
(43) Veröffentlichungstag der Anmeldung: **10.09.2008**
(21) Anmeldenummer: 08101889.7
(22) Anmeldetag: 22.02.2008
(51) Int. Cl.: B60J 1/20

(54) **Fahrzeugfenster-Anordnung**

(30) Priorität: 08.03.2007 DE 202007003598 U
(71) Anmelder: REMIS Gesellschaft für Entwicklung und Vertrieb von technischen Elementen mbH Köln, 50829 Köln (DE)
(72) Erfinder: Isfort, Paul, 50829 Köln (DE)
(74) Vertreter: Selting, Günther

(57) **Zusammenfassung**

Die Anordnung weist ein auf der Außenseite (18) einer Fahrzeugwand (14) vorgehängtes Fenster (22) auf, das eine Fahrzeugwand-Fensteröffnung (12) abdeckt. In der Fensteröffnung (12) ist eine Rolloanordnung (20) montiert, die einen umlaufenden tragenden Rollorahmen (30) aufweist, welcher im wesentlichen in der Wandebene liegt. Der Rollorahmen (30) trägt mindestens ein Abschirmungselement (40, 42), welches in dem von dem tragenden Rollorahmen umschlossenen Raum ausbreitbar ist und nicht in den von der Fahrzeugwand begrenzten Innenraum vorsteht. Dadurch hat das Fenster einen extrem geringen Innenraum-Überstand.

## Beschreibung

Die Erfindung bezieht sich auf eine Fahrzeugfenster-Anordnung bestehend aus einem auf die Außenseite der Fahrzeugwand vorgehängten Fenster, das eine Fahrzeugwand-Fensteröffnung abdeckt und aus einer separaten Rolloanordnung mit einem Rollorahmen, der als Abschirmungselement eine ausziehbare Verdunklungsbahn und/oder ein ausziehbares Insektennetz trägt.

Derartige Fahrzeugfenster-Anordnungen werden insbesondere in Campingfahrzeugen verbaut. Bei Fahrzeugfenster-Anordnungen nach dem Stand der Technik wird die Rolloanordnung bzw. der Rollorahmen stets auf die Innenseite der Fahrzeugwand aufgesetzt. Da der Rollorahmen in der Regel sowohl ein Insektennetz als auch eine Verdunklungsbahn trägt und führt, weist der Rollorahmen mindestens eine Bautiefe von 2 - 3 cm auf, mit der er von der Fahrzeugwand in den Fahrzeuginnenraum hineinragt.

Aufgabe der Erfindung ist es, eine kompaktere Fahrzeugfenster-Anordnung zu schaffen.

Diese Aufgabe wird erfindungsgemäß gelöst mit den Merkmalen des Schutzanspruches 1.

Die erfindungsgemäße Fahrzeugfenster-Anordnung weist eine Rolloanordnung mit einem umlaufenden steifen Rollorahmen auf, der im wesentlichen in der Wandebene liegt und das Abschirmungselement trägt. Der Rollorahmen ist also nicht auf die Innenseite der Fahrzeugwand aufgesetzt, sondern ist in die Fensteröffnung eingelassen. Da die Fahrzeugwand von Campingfahrzeugen eine Stärke von 2 - 4 cm aufweist, kann in die Fensteröffnung ein Rollorahmen eingesetzt werden, der im wesentlichen in der Wandebene liegt und aus dieser nicht oder nur geringfügig herausragt. Insbesondere ragt der Rollorahmen mit weniger als 30 % aus der Wandebene heraus.

Vorzugsweise weist der Rollorahmen mehrere Verriegelungselemente auf, mit denen die Fensterscheibe an dem Rollorahmen in ihrer Schließposition verriegelt wird. Mit den Verriegelungselementen kann bevorzugt auch eine Lüftungsposition des Fensters eingestellt werden. Da der Rollorahmen nicht mehr durch die Fahrzeugwand-Dicke beabstandet von dem Fenster angeordnet ist, sondern in unmittelbarer Nähe des Fensters angeordnet ist, kann der Rollorahmen auch die Verriegelungselemente zur Verriegelung des Fensters in seiner Schließposition aufnehmen. Die Verriegelungselemente müssen also nicht mehr separat in der Fensteröffnung montiert werden. Durch die Vormontage der Verriegelungselemente an dem Rollorahmen wird also der Montageaufwand verringert.

Vorzugsweise weist der Rollorahmen einen Verriegelungszug auf, der mehrere Verriegelungselemente bewegt und durch ein Betätigungselement bewegt wird. Fenster für Campingfahrzeuge u. ä. bestehen in der Regel aus Kunststoff-Fensterscheiben, die häufig keinen versteifenden Rahmen aufweisen. Dieser Umstand erfordert bei größeren Fahrzeugfenster-Anordnungen, sogenannten Panorama-Fensteranordnungen, mehrere über den Umfang des Fensters verteilte Verriegelungselemente. Diese Verriegelungselemente müssen stets bei einer Änderung des Verriegelungszustandes betätigt werden. Bei großen Fahrzeugfenster-Anordnungen können dies vier und mehr Verriegelungselemente sein, die einzeln nacheinander betätigt werden müssen. Durch einen Verriegelungszug können zwei oder mehr Verriegelungselemente mechanisch miteinander gekoppelt und durch ein einziges Betätigungselement bewegt werden. Die Änderung des Verriegelungszustandes des Fenster wird hierdurch vereinfacht und beschleunigt. Im Idealfall werden alle Verriegelungselemente durch einen einzigen Verriegelungszug betätigt, so dass alle Verriegelungselemente durch Betätigung eines einzigen Betätigungselementes bewegt werden können. Der Verriegelungszug kann verborgen in dem Rollorahmen geführt werden.

Vorzugsweise weisen der obere Teil, der untere Teil und die Seitenteile des Rollorahmens jeweils verschiedene Querschnittsprofile auf. Jeder Teil des Rollorahmens ist für seine jeweilige Funktion optimal gestaltet. Der obere Teil des Rollorahmens trägt die Abschirmungselemente, bzw. nimmt diese auf. Die Rolloanordnung besteht aus einem Insektennetz und/oder einer Verdunklungsbahn, beispielsweise einer sogenannten Plisseebahn.

Die Seitenteile dienen im wesentlichen der Führung der Abschirmungselemente bzw. des Insektennetzes und/oder der Verdunklungsbahn. Der untere Teil des Rollorahmens dient der Fixierung eines Handgriffes des Abschirmungselementes in der Gebrauchsposition, also in der Schließposition. Der Rollorahmen ist bevorzugt aus einem Metall-Strang-Pressprofil gefertigt.

Gemäß einer bevorzugten Ausgestaltung dichtet ein umlaufendes Dichtungsprofil in dem Öffnungsrand der Fensteröffnung den Rollorahmen mit der Fahrzeugwand ab. Ferner weist das Dichtungsprofil außenseitig eine Dichtlippe auf, auf der das geschlossene Fenster aufsitzt, so dass bei geschlossenem Fenster der Spalt zwischen dem Fenster und der Fahrzeugwand abgedichtet ist. Das Dichtungsprofil besteht aus einem elastischen Material. Das Dichtungsprofil hat also zwei Funktionen, nämlich den Spalt zwischen dem Rollorahmen und der Fahrzeugwand abzudichten und den Spalt zwischen dem Fenster und der Fahrzeugwand in der Schließposition des Fensters abzudichten.

Vorzugsweise steht das Abschirmungselement in der Öffnungsposition, d. h. in der Nicht-Gebrauchsposition, zusammengezogen am oder im oberen Teil des Rollorahmens. Das Betätigungselement für die Betätigung des Verriegelungszuges und der damit verbundenen Verriegelungselemente ist bevorzugt am unteren Teil des Rollorahmens vorgesehen.

Vorzugsweise ist das Fenster als doppelscheibiges Fenster ausgebildet. Doppelscheibige Fenster bieten eine gute akustische und thermische Isolation.

Gemäß einer bevorzugten Ausgestaltung ist innenseitig ein einstückiger Blendrahmen vorgesehen, durch den der Rollorahmen verblendet wird. Hierdurch wird der Rollorahmen von der Fahrzeuginnenseite aus betrachtet so verblendet, dass er bzw. die Stoßkante zwischen ihm und dem Fensteröffnungs-Rand nicht mehr sichtbar ist. Hierdurch wird ein elegantes Erscheinungsbild realisiert. Durch die Einstückigkeit des Blendrahmens, der beispielsweise aus Kunststoff besteht, fallen auch Stufen, Stoßkanten, u. ä. weg, wie sie bei zusammengesteckten Rahmen bzw. Blendrahmen nahezu unvermeidlich wären.

Im Folgenden wird unter Bezugnahme auf die Zeichnungen ein Ausführungsbeispiel der Erfindung näher erläutert.

Es zeigen:
- Fig. 1: einen Querschnitt einer Fahrzeugfenster-Anordnung mit einem schwenkbaren Fenster und einer Rolloanordnung in der Ebene einer Fahrzeugwand in perspektivischer Darstellung,
- Fig. 2: einen Querschnitt der Fahrzeugfenster-Anordnung der Figur 1 als Vertikalschnitt,
- Fig. 3: eine Detaildarstellung einer Verriegelungsanordnung der Fahrzeugfenster-Anordnung der Figuren 1 und 2,
- Fig. 4: einen perspektivischen Längsschnitt der Fahrzeugfenster-Anordnung der Figuren 1 - 3 und
- Fig. 5: eine Darstellung eines Teiles der Fahrzeugfenster-Anordnung der Figuren 1 - 4, insbesondere des Aufstellmechanismus und der Verriegelungsanordnung.

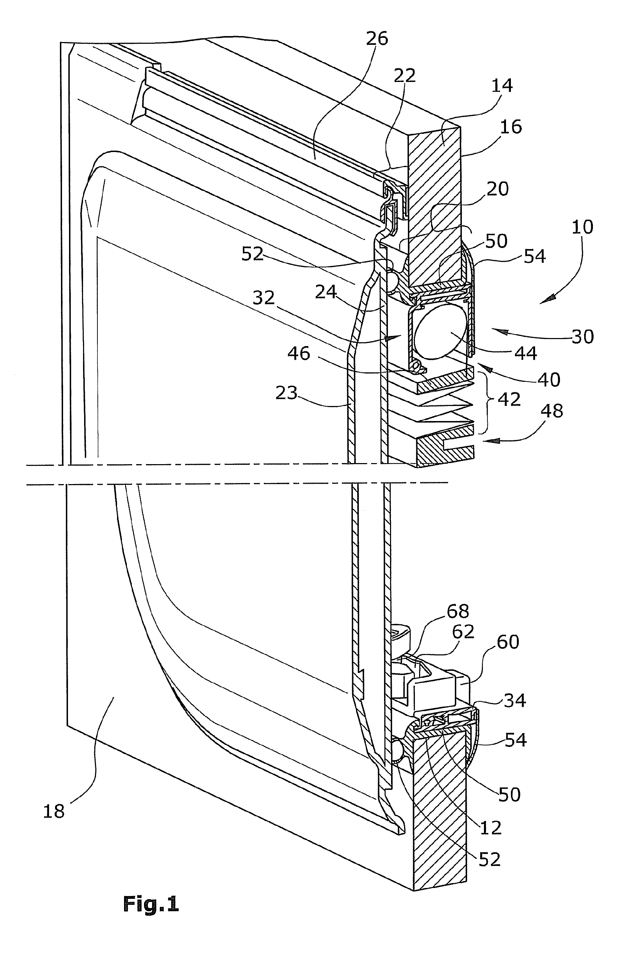

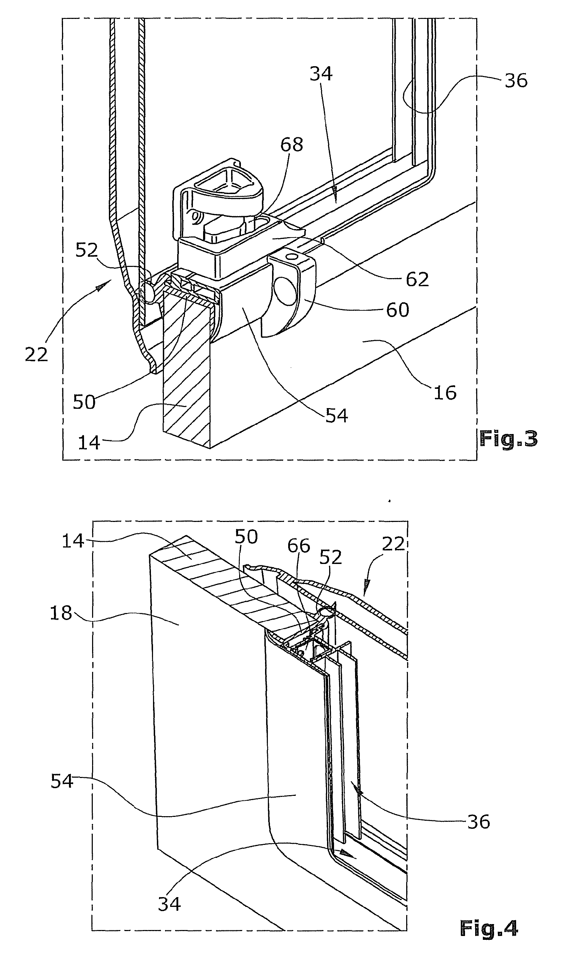

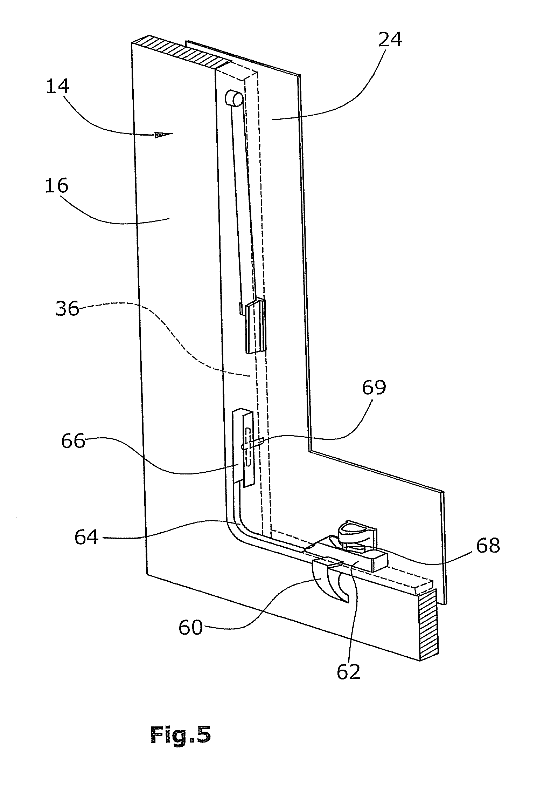

In den Figuren 1 - 5 ist eine Fahrzeugfenster-Anordnung 10 dargestellt, die im Bereich einer Fensteröffnung 12 einer Fahrzeugwand 14 angeordnet ist. Die Fahrzeugwand 14 ist die Wand eines Camping-Fahrzeuges oder eines Camping-Anhängers. Die Fahrzeugwand 14 weist eine Dicke von 2 - 3 cm auf. Die Fahrzeugwand 14 weist eine Innenseite 16 auf, die zur Fahrzeuginnenseite zeigt und eine Außenseite 18 auf, die zur Fahrzeugaußenseite zeigt. Die Fahrzeugwand 14 ist eine ebene, vertikale Wand.

Die Fahrzeugfenster-Anordnung 10 besteht im wesentlichen aus einer Rolloanordnung 20 und einem vorgehängten Fenster 22, das auf der Außenseite 18 der Fahrzeugwand 14 aufliegt und die Fensteröffnung 12 in der Schließposition des Fensters 22 vollständig abdeckt und verschließt.

Das Fenster 22 ist doppelscheibig ausgebildet, weist also zwei Fensterscheiben 23, 24 auf, die luftdicht miteinander verbunden sind. Die Fensterscheiben 23, 24 bestehen aus transparentem Kunststoff. Das Fenster 22 ist mit seiner oberen Seite in einer Gelenkschiene 26 schwenkbar gelagert, so dass das Fenster zum Öffnen nach oben geschwenkt werden kann.

Die Rolloanordnung 20 weist u. a. einen steifen tragenden Rollorahmen 30 auf, der im wesentlichen in der Wandebene liegt, also nicht wesentlich aus der Fahrzeugwand 14 nach innen oder außen herausragt. Der Rollorahmen 30 ist ein rechteckiger Rahmen, der aus vier Teilen besteht, wobei der obere Teil 32, der untere Teil 34 und die beiden Seitenteile 36 jeweils verschiedene Querschnittsprofile aufweisen. Die beiden Seitenteile 36 haben einen identischen Querschnitt. Der Rollorahmen 30 bzw. seine Teile 32, 34, 36 bestehen aus starren stranggepressten Metallprofilen. Der Rollorahmen 30 füllt die Fensteröffnung 12 passend aus.

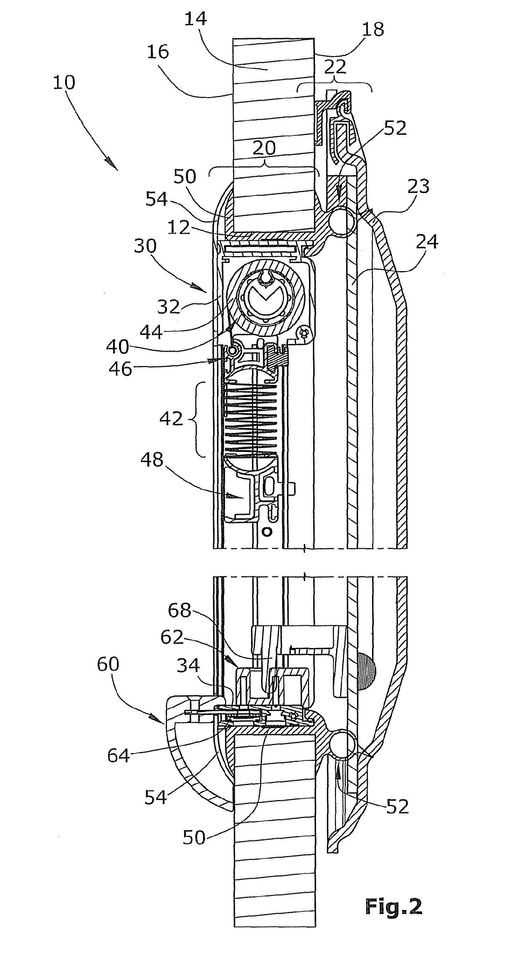

Der obenliegende Rollorahmen-Teil 32 weist einen nach unten geöffneten Hohlraum auf, in dem die beiden Abschirmungselemente 40, 42 seriell aufgehängt sind. Das obere Abschirmungselement 40 ist ein luftdurchlässiges Insektennetz, das in der Nicht-Gebrauchsposition auf einem drehbaren Rollozylinder 44 aufgerollt ist, der innerhalb des oberen Teiles 32 drehbar gelagert ist. An das untere Ende des oberen Abschirmungselementes 40 schließt sich eine vertikal bewegliche und in den Seitenteilen 36 geführte Zwischenleiste 46 an. An die Zwischenleiste 46 schließt sich unten das untere Abschirmungselement 42 an, das als vielfach gefaltete Verdunklungsbahn ausgebildet ist, auch Plissee genannt. An das untere Ende des unteren Abschirmungselementes 42 ist eine Griffleiste 48 befestigt, die im wesentlichen der Bedienung der Rolloanordnung 20 dient. Die Abschirmungselemente sind gemäß Figur 2, ebenso wie der Rollozylinder 44, innerhalb der Breite des Rollorahmens 30 angeordnet und stehen auch im ausgefahrenen Zustand nicht über die Kontur des Rollorahmens zum Innenraum hin vor.

In dem Öffnungsrand der Fensteröffnung 12 sitzt ein umlaufendes elastisches Dichtungsprofil 50, das eine luft- und feuchtigkeitsdichte Abdichtung des Spaltes zwischen dem Rollorahmen 30 und der Fensteröffnung 12 bildet. Das Dichtungsprofil 50 weist eine zur Innenseite abragende Dichtlippe 52 auf, auf der das geschlossene Fenster 22 mit seiner Innenscheibe 24 luft- und feuchtigkeitsabdichtend aufliegt.

An der Innenseite ist ein flacher einstückiger Verblendungsrahmen 54 aus Kunststoff angeordnet, der den Rand der Fensteröffnung 12 und den Rollorahmen 30 zur Innenseite hin verblendet.

Zur Verriegelung des Fensters 22 in der Schließposition, zum Halten des Fensters in einer leicht geöffneten Lüftungsposition sowie zum vollständigen Entriegeln zur Ermöglichung des Hochschwenkens des Fensters 22 ist eine Verriegelungsanordnung vorgesehen. Die Verriegelungsanordnung besteht im wesentlichen aus zwei getrennt voneinander bedienbaren und zueinander symmetrischen Anordnungen.

Eine Verriegelungsanordnung wird im wesentlichen gebildet von einem Betätigungselement 60, einem Kulissenschieber 62, der unmittelbar mit dem Betätigungselement 60 verbunden ist, einem Schieberband 64, das unmittelbar von dem Betätigungselement 60 verschoben wird, einem Verriegelungsschieber 66 in dem korrespondierenden Seitenteil 36 und zwei an der Innenscheibe 24 fixierten Verriegelungsstiften 68, 69.

Bei seitlichem Verschieben des Betätigungselementes 60 wird der Kulissenschieber 62 und über das Schiebeband 64 der seitliche Verriegelungsschieber 66 verschoben zwischen einer Öffnungsposition, einer Lüftungsposition und einer Verriegelungsposition. In den Kulissenschieber 62 und den Verriegelungsschieber 66 greifen ggf. die Verriegelungsstifte 68, 69 des Fensters 22 ein.

Diese Anordnung ist in beiden Hälften der Fahrzeugfenster-Anordnung vorgesehen. Die gesamte Verriegelungsanordnung kann alternativ auch durch ein einziges Betätigungselement betätigt werden, beispielsweise durch ein mittiges Betätigungsrad. Der Kulissenschieber 62 und der Verriegelungsschieber 66 bilden Verriegelungselemente der Verriegelungsanordnung. Das Schieberband 64 bildet einen Verriegelungszug.

Bei der beschriebenen und dargestellten Fahrzeugfenster-Anordnung ragt die Rolloanordnung 20 einschließlich des Verblendungsrahmens 54 nur wenige Millimeter von der Fahrzeugwand-Innenseite 16 ins Fahrzeuginnere hinein. Der Verblendungsrahmen 54 ist einstückig und stufenfrei ausgebildet und verdeckt den gesamten Rollorahmen 30 einschließlich des umlaufenden Dichtungsprofiles 50. Da das Fenster 22 von außen auf die Außenseite 18 der Fahrzeugwand 14 aufgesetzt ist, kann die Form und Größe des Fensters relativ frei gewählt werden.

## Patentansprüche

1. Fahrzeugfenster-Anordnung (10) mit
einem auf die Außenseite (18) einer Fahrzeugwand (14) vorgehängten Fenster (22), das eine Fahrzeugwand-Fensteröffnung (12) abdeckt, und
einer in der Fensteröffnung (12) montierbaren Rolloanordnung (20) mit einem umlaufenden tragenden Rollorahmen (30), der im wesentlichen in der Wandebene liegt und mindestens ein Abschirmungselement (40, 42) trägt, wobei das mindestens eine Abschirmungselement (40, 42) innerhalb der Rahmentiefe des Rollorahmens ausbreitbar ist und nicht aus diesem heraus vorsteht.

2. Fahrzeugfenster-Anordnung nach Anspruch 1, **dadurch gekennzeichnet, dass** der Rollorahmen (30) mehrere Verriegelungselemente (62, 66) aufweist, mit denen das Fenster (22) an dem Rollorahmen (30) verriegelt wird.

3. Fahrzeugfenster-Anordnung nach Anspruch 1 oder 2, **dadurch gekennzeichnet, dass** der Rollorahmen (30) einen Verriegelungszug (64) aufweist, der mehrere Verriegelungselemente (62, 66) bewegt und durch ein Betätigungselement (60) bewegt wird.

4. Fahrzeugfenster-Anordnung nach einem der Ansprüche 1 - 3, **dadurch gekennzeichnet, dass** der obere Teil (32), der untere Teil (34) und die Seitenteile (36) des Rollorahmens jeweils verschiedene Querschnittsprofile aufweisen.

5. Fahrzeugfenster-Anordnung nach einem der Ansprüche 1 - 4, **dadurch gekennzeichnet, dass** ein umlaufendes Dichtungsprofil (50) vorgesehen ist, das den Spalt zwischen dem Rollorahmen (30) und dem Öffnungsrand der Fensteröffnung (12) abdichtet und eine zur Außenseite abragende umlaufende Dichtlippe (52) aufweist, auf der das Fenster (22) in einer Schließposition aufliegt.

6. Fahrzeugfenster-Anordnung nach einem der Ansprüche 1 - 5, **dadurch gekennzeichnet, dass** der Rollorahmen (30) mindestens ein Abschirmungselement (40, 42) trägt, das in seiner Öffnungsposition am oberen Teil (32) des Rollorahmens (30) steht.

7. Fahrzeugfenster-Anordnung nach Anspruch 6, **dadurch gekennzeichnet, dass** das Abschirmungselement (40, 42) als ein Insektennetz und/oder eine Verdunklungsbahn ausgebildet ist.

8. Fahrzeugfenster-Anordnung nach einem der Ansprüche 2 - 7, **dadurch gekennzeichnet, dass** ein Betätigungselement (60) zur Betätigung der Verriegelungselemente (62, 66) vorgesehen ist, das am unteren Teil (34) des Rollorahmens (30) angeordnet ist.

9. Fahrzeugfenster-Anordnung nach einem der Ansprüche 1 - 8, **dadurch gekennzeichnet, dass** das Fenster (22) doppelscheibig ausgebildet ist.

10. Fahrzeugfenster-Anordnung nach einem der Ansprüche 1 - 9, **dadurch gekennzeichnet, dass** ein einstückiger Verblendungsrahmen (54) den Rollorahmen (30) innenseitig abdeckt.
